(19) **Europäisches Patentamt / European Patent Office / Office européen des brevets**

(11) **EP 2 075 527 B1**

(12) **FASCICULE DE BREVET EUROPEEN**

(45) Date de publication et mention
de la délivrance du brevet:
**15.09.2010 Bulletin 2010/37**

(51) Int Cl.:
***G01B 7/004*** *(2006.01)*

(21) Numéro de dépôt: **08172425.4**

(22) Date de dépôt: **19.12.2008**

(54) **Procédé de mesure par digitalisation des sections de passage d'un secteur de distributeur pour turbomachine**

Messverfahren durch Digitalisierung der Durchlaufsektionen einer Leitschaufel für ein Turbotriebwerk

Method for measuring by scanning the throat cross-sections of a turbomachine nozzle sector

(84) Etats contractants désignés:
**DE FR GB IT SE**

(30) Priorité: **24.12.2007 FR 0760334**

(43) Date de publication de la demande:
**01.07.2009 Bulletin 2009/27**

(73) Titulaire: **SNECMA**
**75015 Paris (FR)**

(72) Inventeur: **Menuey, Justine**
**86100 Chatellerault (FR)**

(74) Mandataire: **Barbin le Bourhis, Joël et al**
**Cabinet Beau de Loménie**
**158, rue de l'Université**
**75340 Paris Cedex 07 (FR)**

(56) Documents cités:
**EP-A- 1 760 427    US-A1- 2007 050 172**

## Description

La présente invention concerne un procédé de mesure des sections de passage d'un secteur de distributeur pour turbomachine. De manière plus générale, elle vise également un procédé de choix d'un arrangement de secteurs pour un distributeur pour turbomachine.

Dans un distributeur pour turbomachine, un secteur est une pièce connue, comportant une ou plusieurs aubes reliant deux plates-formes. La réunion en couronne des secteurs constitue, pour l'essentiel, le distributeur. Dans le distributeur, chaque secteur se positionne ou se met en position relative de montage par rapport aux deux secteurs adjacents situés de part et d'autre, par aboutement des surfaces de contact de ses plates-formes avec celles des plates-formes des secteurs adjacents.

Les sections de passage d'un secteur sont les aires, mesurées perpendiculairement au sens du flux, de passage du flux à travers le secteur de distributeur. Par extension, les sections de passage peuvent aussi désigner plus simplement les largeurs de passage du flux à travers le secteur de distributeur.

Dans ce qui suit les sections de passage seront considérées dans leur sens exact, qui se réfère à des sections de passage du flux qui sont des aires. Plus généralement, on comprendra que la présente invention vise aussi le cas où les sections de passage du flux sont seulement les largeurs de passage du flux précitées.

Dans les sections de passages du flux dans un secteur de distributeur, on peut distinguer des sections de passage internes et des sections de passage externes.

Les sections de passage internes, concernant seulement des secteurs de distributeur comportant au moins deux aubes, sont mesurées entre des aubes adjacentes deux à deux du secteur considéré.

Les sections de passage externes, au nombre de deux, valent chacune la moitié de l'aire formée entre une aube d'extrémité du secteur et une aube dite de référence utilisée pour la mesure. Cette aube de référence est ou représente l'aube adjacente du secteur en vis-à-vis dans le distributeur. En principe, l'aire entre l'aube d'extrémité du secteur de distributeur et l'aube de référence doit être déterminée avec une aube de référence qui serait aux cotes nominales ; on obtient alors la section de passage nominale à cette extrémité du secteur de distributeur. Par extension, il est possible de déterminer une section de passage réelle pour l'extrémité du distributeur par rapport à une aube de référence faisant partie d'un secteur donné ; dans ce cas, on détermine l'aire entre l'aube d'extrémité du secteur de distributeur et cette dernière aube, et la section de passage pour cette extrémité du secteur de distributeur est la moitié de cette aire.

Il est connu que dans un distributeur la performance globale dépend notamment des sections de passage du distributeur, c'est-à-dire de la somme des sections de passage des différents secteurs. La mesure de ces sections de passage est donc une opération importante.

On notera en particulier, que lors des opérations de réparations, qui nécessitent un décapage des secteurs de distributeur suivi d'un rechargement de ces pièces, la valeur des sections de passage est susceptible de changer. A l'issue de telles opérations, il est donc opportun de remesurer la valeur des sections de passage du distributeur pour s'assurer qu'elle reste conforme aux exigences spécifiées.

Pour mesurer la section de passage d'un secteur, deux méthodes de mesure sont habituellement utilisées.

On peut tout d'abord utiliser un banc de mesure dans lequel est placé le secteur et permettant de faire passer un flux d'air à travers celui-ci, et de mesurer les variations de différentes grandeurs relatives au flux d'air lors de son passage à travers le secteur. A partir des variations de ces grandeurs, il est possible de déterminer les sections de passage du secteur.

Un tel banc est utilisé principalement dans le cas de distributeurs basse pression. Le procédé de mesure ainsi défini a l'inconvénient d'avoir une précision faible et de ne pas permettre d'acquérir d'informations sur le secteur autres que la section de passage.

Le second procédé de mesure utilisé pour mesurer les sections de passage de secteurs de distributeur fait appel à un banc de mesure essentiellement mécanique.

Les mesures sont faites de la manière suivante : un secteur de distributeur est positionné sur le banc de mesure entre deux aubes de référence. Ces aubes de référence sont des aubes fixes intégrées dans le banc de mesure. Une fois le secteur fixé et bloqué, l'opérateur vient appliquer un comparateur muni d'une pointe de touche en différents points d'une part du secteur de distributeur mesuré, et d'autre part des aubes de référence intégrées au montage, de manière à mesurer différents points du secteur de distributeur. Habituellement, le comparateur utilisé est de type multi-cotes, c'est-à-dire qu'il mesure simultanément plusieurs cotes par exemple huit cotes de distance entre une aube et l'aube adjacente ainsi qu'une cote de distance entre les deux plates-formes opposées du secteur de distributeur, à l'intérieur du canal inter-aubes, si l'on désigne ainsi le passage entre des aubes adjacentes.

Ce second procédé de mesure est utilisé en particulier pour des distributeurs haute pression. S'il est relativement simple à mettre en oeuvre, il présente en revanche différents inconvénients et tout d'abord, il manque de précision ; en particulier, les résultats fournis sont souvent dépendants de l'opérateur ayant réalisé la mesure. D'autre part, le nombre d'informations sur la pièce produite par les mesures est relativement faible. Comme cela a été dit, de manière classique, avec ce procédé de mesure, on réalise moins de dix mesures de distances entre une aube et l'aube adjacente et souvent une seule mesure de distance dans le sens perpendiculaire entre les deux plates-formes du secteur de distributeur.

Le document US 2007/0 050 172 divulgue un procédé de mesure pour turbomachine.

Un premier objet de l'invention est de définir un procédé de mesure des sections de passage d'un secteur de distributeur pour turbomachine par rapport à deux aubes de référence, qui présente une précision accrue, ledit secteur comportant au moins une aube, le procédé comportant les étapes suivantes :

a) on produit par digitalisation un modèle numérique tridimensionnel du secteur,

b) on fournit les modèles numériques de chacune des deux aubes de référence,

c) on recale les modèles numériques des deux aubes de référence aux extrémités du modèle numérique du secteur en position relative de montage dans le distributeur,

d) on détermine les sections de passage du secteur à partir de sections des modèles numériques du secteur et des aubes de référence.

Cet objectif est atteint grâce au fait que :

- le secteur de distributeur comporte des surfaces de contact, et est placé en position relative par rapport à des secteurs de distributeur adjacents par aboutement de ces surfaces de contact,
- les modèles numériques du secteur et des aubes de référence comportent une modélisation des surfaces de contact impliquées dans leur mise en position relative de montage, et
- l'étape c) de recalage des modèles numériques des aubes de référence avec le modèle numérique du secteur est réalisée en mettant en correspondance ces surfaces de contact.

Par digitalisation, on entend ici tout procédé de relevé de coordonnées tridimensionnelles sur la pièce, que ce soit par des moyens mécaniques à l'aide d'une pointe de touche, ou par des moyens optiques à l'aide d'un scanner laser ou avec projection de lumière structurée par exemple, ou encore par photogrammétrie. Dans tous les cas, la digitalisation suppose le relevé d'un nombre important de coordonnées tridimensionnelles, de manière à obtenir un "nuage de points", ce qui permet notamment de présenter sur un écran d'ordinateur le modèle numérique obtenu sous forme de maillage.

L'utilisation de la digitalisation, pour des pièces comme des secteurs de distributeur, est une opération délicate, mais qui présente en revanche des avantages substantiels.

Cette opération est délicate tout d'abord en raison de la forme des surfaces du secteur de distributeur. Un secteur de distributeur est une pièce de forme complexe, présentant de nombreuses surfaces gauches, et dont les directions normales sont dirigées dans toutes les directions de l'espace.

De plus, les surfaces que l'on a besoin de mesurer pour déterminer les sections de passage du secteur sont disposées de part et d'autre du canal inter-aube. Ce canal est étroit, mesurant quelques millimètres à quelques centimètres de large ; l'introduction d'un outil de mesure dans cet espace est donc difficile. En plus, dans un canal inter-aubes, les surfaces à mesurer sont des surfaces en regard les unes des autres, disposées respectivement sur l'intrados d'une aube, sur l'extrados de l'aube adjacente, et sur les surfaces internes (c'est-à-dire du côté des aubes) des deux plates-formes du secteur.

Il est en outre nécessaire, non seulement de mesurer les surfaces de passage précédemment mentionnées, mais aussi, au cours de la même mesure, de mesurer les surfaces de contact qui seront nécessaires pour la mise en référence du modèle numérique obtenu. Les surfaces de contact sont orientées en général de manière complètement différente des surfaces à mesurer. Il en résulte une difficulté de mesure supplémentaire.

Enfin, les précisions attendues de ces mesures sont importantes. En effet, l'incertitude de mesure admise n'excède pas le centième voire quelques centièmes de millimètre.

Pour les différentes raisons citées précédemment, la digitalisation du secteur de distributeur est une opération difficile. On notera, cela dit, qu'il n'est pas nécessaire de digitaliser l'ensemble des surfaces extérieures du secteur. Pour une section de passage donnée entre deux aubes, il est indispensable de digitaliser les surfaces en vis-à-vis des aubes et des deux plates-formes, au niveau de la plus faible section de passage du flux dans le canal inter-aubes. Il est également nécessaire de digitaliser les surfaces de contact du secteur de distributeur, servant au positionnement relatif entre le secteur et les secteurs adjacents dans le distributeur. Ce point sera développé plus loin.

Inversement, la digitalisation fournit un modèle numérique tridimensionnel du secteur de distributeur qui contient un nombre très important d'informations sur celui-ci, à savoir, le relevé quasiment complet de la forme extérieure du secteur de distributeur. L'exploitation de ce modèle numérique permet en particulier de déterminer les sections de passage du distributeur. Cette détermination peut se faire plus précisément que par l'exploitation des quelques mesures ponctuelles que permettait utilisation du banc de mesure avec mesure réelle d'un flux d'air ou du banc de mesure mécanique précédemment cités. En outre, le modèle numérique permet également de mesurer un grand nombre d'autres cotes relatives au secteur de distributeur et plus généralement il permet de mesurer et vérifier l'ensemble des cotes portées au plan. Il est donc possible de conserver en mémoire ces informations, pour constituer une base de données extrêmement riche, permettant des opérations de traçabilité poussées.

Le procédé comporte une étape importante, en particulier du point de vue de la précision de mesure, qui est celle de recalage du modèle numérique des aubes de référence par rapport aux aubes d'extrémité du secteur de distributeur mesuré. (Par recalage, on désigne ici la détermination d'un changement de repère tridimensionnel, à appliquer à un modèle numérique tridimensionnel, pour le mettre dans une position relative donnée par rapport à un autre modèle tridimensionnel. On peut parler également de mise en référence).

Pour réaliser le recalage des modèles numériques des aubes de référence sur le modèle numérique du secteur mesuré, une méthode alternative à l'invention aurait consisté à réaliser le recalage grâce au banc de montage, c'est-à-dire à procéder à un recalage mécanique des aubes de référence par rapport au secteur de distributeur mesuré. Cependant, selon l'invention, le recalage n'est pas fait entre des pièces mécaniques, mais de manière numérique, sur ordinateur, entre les modèles numériques des aubes de référence et le modèle numérique du secteur de distributeur mesuré, en mettant en correspondance, c'est-à-dire sensiblement dans des positions confondues ou de contact, leurs surfaces de contact respectives.

Avantageusement, le recalage numérique suit ainsi les mêmes règles, et fournit donc les mêmes résultats, que le recalage réel qui pourrait être réalisé entre le secteur de distributeur mesuré et le secteur de distributeur adjacent.

On notera en outre qu'en recalant simultanément un ensemble de secteurs de distributeurs, leurs sections de passages (chacune étant relativement aux deux secteurs adjacents dans l'arrangement de secteurs considéré) peuvent être déterminées toutes ensemble.

Selon un mode de réalisation, les aubes de référence font partie de secteurs de distributeur. Ces secteurs de distributeur peuvent être soit des secteurs de distributeur étalon, dont les dimensions sont les cotes nominales du secteur, ou encore des secteurs de distributeur effectivement utilisés dans une turbomachine, et par rapport auxquels on veut mesurer les sections de passage du secteur de distributeur mesuré.

En général, le procédé selon l'invention permet de s'affranchir du banc de montage ou du moins d'utiliser un banc de montage relativement simple. En effet dans le procédé, le secteur de distributeur est mesuré seul, sans positionnement relatif particulier par rapport à des aubes de référence ou à d'autres pièces (ce qui n'empêche pas cependant d'utiliser des moyens de fixation ou de maintien du secteur pendant la mesure).

Selon un mode de réalisation, le modèle numérique des aubes de référence fourni à l'étape b) est un modèle numérique théorique des aubes. Par modèle numérique théorique, on désigne ici un modèle qui a été généré par ordinateur, typiquement à l'aide d'un logiciel de conception assistée par ordinateur (CAO) ; par opposition à un modèle résultant d'une digitalisation. Avantageusement dans ce mode de réalisation, les aubes de référence n'ont pas à être digitalisées chaque fois que les sections de passage d'un secteur de distributeur doivent être déterminées.

Selon un mode de réalisation, le modèle numérique d'au moins une des aubes de référence est obtenu par digitalisation d'au moins un autre secteur de distributeur. Dans ce dernier cas, la mesure de la section de passage externe, à l'extrémité considérée du secteur de distributeur, est une mesure relative, par rapport à l'autre secteur de distributeur, dont une aube d'extrémité est une des aubes de référence utilisées pour la mesure.

Le recalage des modèles numériques des aubes de référence sur celui du secteur de distributeur est fait de la manière suivante. Comme cela a été écrit, le secteur de distributeur comporte des surfaces de contact, et est placé en position relative par rapport aux secteurs de distributeur adjacents par aboutement de ces surfaces de contact.

Selon un mode de réalisation, l'étape a) de digitalisation est réalisée à l'aide d'un moyen de mesure optique sans contact. L'utilisation de la mesure sans contact ou mesure optique est particulièrement intéressante dans le cas des secteurs de distributeur car elle évite toute rayure de la pièce et toute dégradation de la surface de celle-ci.

Selon un mode de réalisation, la digitalisation est automatisée. Ce résultat peut être obtenu notamment en embarquant le capteur de digitalisation, comme un scanner 3D avec projection de lumière structurée, à l'extrémité du bras d'un robot. Le bras du robot parcourt une trajectoire prédéterminée, comportant un certains nombre de positions d'arrêt. Lors de l'arrêt du bras à ces positions d'arrêt, le capteur de digitalisation procède à une acquisition de données. De manière connue, les différentes acquisitions réalisées aux différentes positions d'arrêt sont recalées les unes en référence par rapport aux autres automatiquement, par un calculateur, de manière à constituer le modèle numérique tridimensionnel du secteur digitalisé.

Selon un mode de réalisation, les étapes de recalage et/ou de détermination des sections de passage, sont automatisées. Un logiciel du calculateur utilisé pour réaliser les étapes c) et d) de recalage et de détermination des sections de passage est en effet programmé pour réaliser ces opérations en séquence, sans intervention humaine. Le résultat obtenu est un rapport de contrôle indiquant les sections de passage cherchées.

Les avantages de l'automatisation sont un gain de temps, une réduction des erreurs opératoires, une réduction du temps de main d'oeuvre, et une augmentation de la reproductibilité des résultats, et au final une meilleure précision du procédé de mesure.

Un second objet de l'invention est de remédier aux inconvénients précités en définissant un procédé de choix d'un arrangement de secteurs pour un distributeur pour turbomachine, **caractérisé en ce qu**'il comporte les étapes de :

A. on crée par digitalisation une base de données des modèles - numériques tridimensionnels de secteurs pour distributeur ;

B. on fixe un critère de choix d'un arrangement de secteurs et une valeur souhaitée pour ce critère, ce critère étant fonction des sections de passage des secteurs en position relative de montage dans l'arrangement ;

C. pour différents arrangements évalués, on détermine par montage virtuel la position relative des secteurs montés ensemble ; on évalue alors les sections de passage des secteurs, à l'aide du procédé de mesure des sections de passage d'un distributeur précédemment décrit, en prenant comme aubes de référence pour un secteur les aubes en vis-à-vis des secteurs adjacents dans l'arrangement ; à partir des sections de passage obtenues, on détermine alors la valeur du critère de choix pour l'arrangement évalué ;

D. on retient l'arrangement pour lequel le critère de choix a la valeur la plus proche de la valeur souhaitée.

Dans ce qui précède, un arrangement de secteurs pour un distributeur pour turbomachine désigne la suite ordonnée des références individuelles de ces secteurs assemblés en couronne pour former un distributeur. Ainsi, deux arrangements se distinguent dès lors que les positions des secteurs à l'intérieur du distributeur ne sont pas les mêmes, par exemple si les secteurs ont subit une permutation. On notera qu'un arrangement de secteurs peut désigner la suite ordonnée des références individuelles d'un ensemble de secteurs qui ne constituent pas un distributeur entier mais seulement une partie de celui-ci.

Par ailleurs, le choix d'un arrangement d'un ensemble de secteurs porte d'une part sur le choix des secteurs qui composent l'arrangement, mais aussi sur les positions respectives de ceux-ci dans l'arrangement.

Le procédé de choix d'un arrangement de secteur présenté précédemment permet avantageusement d'optimiser le choix des secteurs et leurs positionnements relatifs dans un distributeur lors de la constitution du distributeur. Il s'ensuit que l'on obtient un distributeur aux performances accrues, et à la durée de vie augmentée. Bien entendu, le procédé vise plus particulièrement à permettre le choix d'un arrangement d'un ensemble de secteurs constituant un distributeur complet.En outre, l'utilisation d'une base de données des modèles numériques tridimensionnels des secteurs de distributeur permet le contrôle et le suivi dans le temps d'un nombre important de caractéristiques géométriques des secteurs de distributeur.

Le critère fixé dans l'étape B) peut prendre différentes valeurs en fonction des contraintes jugées les plus importantes pour l'optimisation du distributeur. Il est ainsi possible, par exemple, de chercher à rendre les sections de passage les plus voisines possibles les unes par rapport aux autres dans le distributeur, indépendamment de leurs dimensions respectives ; etc.

Selon un mode de réalisation, à l'étape C), au moins un arrangement évalué est la combinaison d'un arrangement choisi par le procédé et d'un autre secteur ou d'un autre arrangement choisi à l'aide du procédé. L'algorithme de montage du distributeur est ainsi un algorithme récursif : on définit peu à peu l'arrangement des secteurs composant le distributeur, en optimisant à chaque étape l'ajout d'un nouveau secteur de distributeur par rapport à l'arrangement existant.

Enfin, l'utilisation d'une base de données de modèles tridimensionnels de secteurs de distributeur peut être utilisée soit pour optimiser le montage d'un seul distributeur, soit pour optimiser un parc de secteurs de distributeur permettant de composer plusieurs distributeurs. Ainsi selon le mode de réalisation, à l'étape A), la base de données utilisée pour le procédé peut contenir des secteurs venant d'un seul distributeur, ou encore des secteurs venant d'au moins deux distributeurs différents.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

la figure 1 est une vue en perspective d'un banc de mesure de secteur de distributeur;

la figure 2 est une vue en perspective de trois secteurs de distributeur en position relative de montage, les surfaces de contact étant mises en contact par aboutement ;

la figure 3 est une vue en coupe perpendiculairement à l'axe des aubes, en position relative de montage, d'un secteur mesuré et de deux secteurs adjacents ;

la figure 4 est une vue en coupe de deux secteurs adjacents, faisant apparaître la coupe du canal inter-aubes dans laquelle est mesurée une section de passage entre deux aubes adjacentes ; et

la figure 5 est une vue de face d'un ensemble de secteurs pour distributeur, dont l'arrangement est optimisé grâce au procédé de choix d'un arrangement de secteurs pour distributeur selon l'invention.

On notera que lorsqu'un élément apparaît sur plusieurs figures, soit à l'identique, soit sous une forme analogue, il est décrit en relation avec la première figure sur laquelle il apparaît ; de plus, la description de l'élément n'est faite qu'une fois.

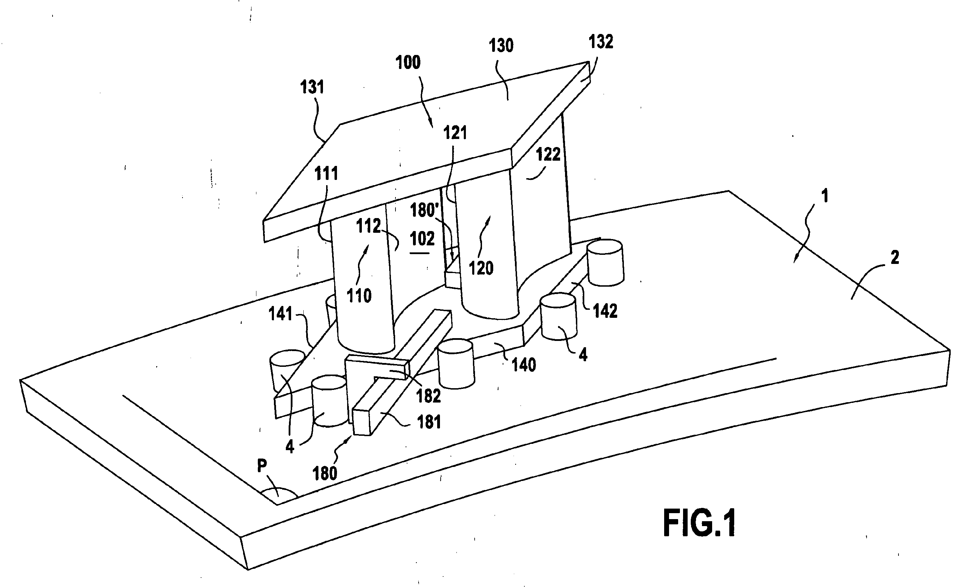

En référence aux figures 1 à 3, un secteur de distributeur, dit secteur 'mesuré', dont on souhaite mesurer les sections de passage, va maintenant être présenté. La réunion de tels secteurs permet de composer un distributeur, agencé autour d'un axe de distributeur.

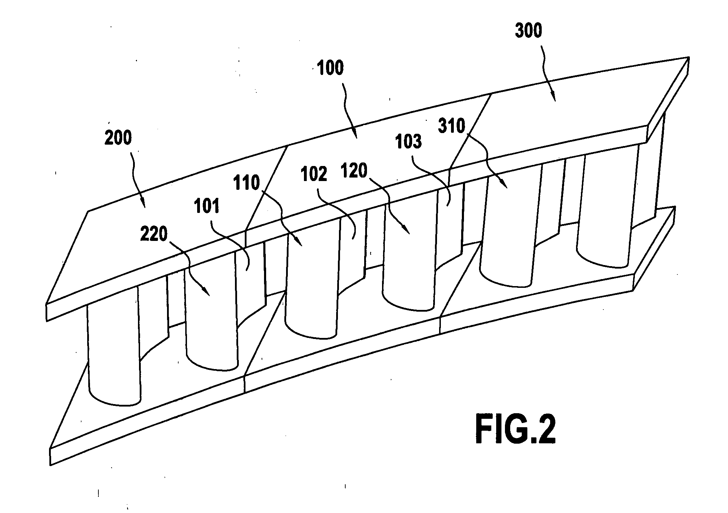

Le secteur de distributeur 100 visible en figure 1 comporte deux plates-formes 130, 140, sensiblement parallèles. Ces plates-formes sont sensiblement de forme cylindrique autour de l'axe du distributeur. Ces plates-formes 130, 140 comportent des surfaces de contact 131, 132, 141, 142, dirigées respectivement vers les deux secteurs de distributeurs disposés de part et d'autre du secteur 100 mesuré (en position relative de montage). Les surfaces de contact 131, 132, 141, 142 sont prévues pour maintenir en position relative de contact les secteurs de distributeur adjacents, par exemple les secteurs 100, 200, 300 apparaissant sur la figure 2.

Le secteur de distributeur 100 comporte en outre deux aubes 110, 120. Chacune de ces aubes présente un profil aérodynamique et comporte un intrados 111, 121, et un extrados 112, 122. Comme il n'y a que deux aubes dans le secteur 100, chacune des aubes 110, 120 est une aube d'extrémité. Ainsi, chacune de ces aubes est amenée à être disposée en vis-à-vis avec une aube d'extrémité du secteur de distributeur adjacent, en position relative de montage. Plus précisément, l'extrados 111 est en vis-à-vis de l'intrados d'une aube d'extrémité 220 du secteur 200, et l'intrados 122 est en vis-à-vis de l'extrados d'une aube 310 du secteur 300. Entre les différentes aubes 220,110,120,310, sont formés respectivement des passages inter-aubes 101, 102, 103. Le passage 102 est formé entre les aubes 110 et 120 du secteur 100. En revanche, les passages inter-aubes 101 et 103 sont formés entre, d'une part une aube (110 ou 120) du secteur, et d'autre part l'aube de référence en vis-à-vis, 220 ou 310.

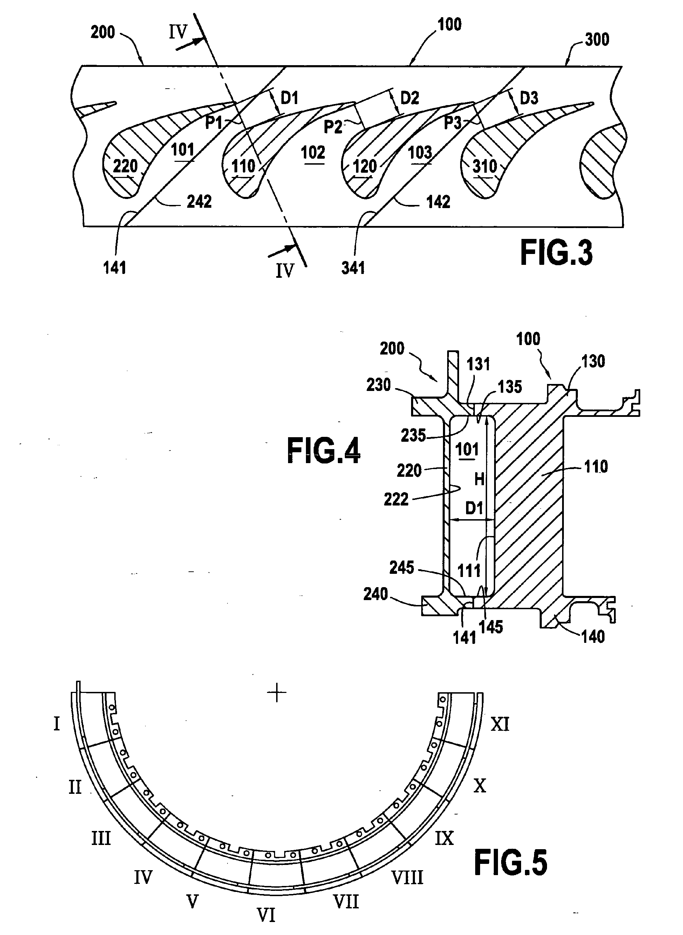

Les sections de passage sont présentées en relation avec la figure 3. Celle-ci représente une coupe dans un plan P, perpendiculaire à l'axe des aubes et sensiblement à mi-hauteur de celles-ci, des secteurs de distributeur 100, 200, 300 faisant apparaître notamment les aubes de référence 220 et 310 (On s'est placé dans le cas où les aubes seraient des aubes pleines).

La coupe est représentée après recalage en position relative de montage, des modèles numériques des différents secteurs impliqués. Dans ce cas, les aubes 220 et 310 sont les aubes de référence.

La coupe fait apparaître les sections des différentes aubes 220, 110, 120, 310 ; les surfaces de contact mises en correspondance, 242, 141, 142, 341 ; et les canaux inter-aubes 101, 102, 103. Par conception, la forme nominale des différents canaux est sensiblement la même.

Comme on peut le voir, dans un canal inter-aubes donné, la distance entre les aubes fluctue en fonction de la position dans le canal. Il existe habituellement un seul plan du canal, pour lequel cette distance est minimale. Comme la distance entre les plates-formes 130, 140 est sensiblement constante, c'est aussi dans ce plan que la section de passage entre les aubes est minimale, pour un canal inter-aubes donné. Ce plan correspond respectivement aux plans P1, P2, P3 pour les canaux 101, 102, 103 ; la distance entre les aubes dans ces sections est respectivement D1, D2, D3. On notera qu'avantageusement, dans le procédé selon l'invention, il est possible d'optimiser pour chaque canal inter-aubes la position du plan P1, P2, P3 de section, permettant ainsi de déterminer le plan du canal inter-aubes dans lequel la section de passage est effectivement minimale.

La figure 4 fait apparaître la coupe des deux secteurs de distributeur 100 et 200 suivant le plan P1. Elle fait apparaître la coupe du canal inter-aubes 101 dans le plan P1, dans lequel la distance entre les aubes 220 et 110 est minimale. La section de passage (externe) du secteur de distributeur 100, correspondant à cette extrémité, est égale à la moitié de l'aire de l'espace libre apparaissant entre les deux aubes 110 et 220 et entre les plates-formes respectives des secteurs 100 et 200 ; elle vaut donc sensiblement la moitié du produit H x D1.

Le procédé de mesure des sections de passage d'un secteur de distributeur selon l'invention va maintenant être détaillé.

Au cours d'une première phase de digitalisation, on génère un modèle numérique du secteur de distributeur, ainsi que de ses surfaces de contact. La figure 1 présente un banc de montage 1 utilisé pour la réalisation de cette étape du procédé.

Ce banc de montage 1 se compose d'une plaque métallique 2 rigide, sur laquelle est fixé le secteur de distributeur mesuré 100. Cette plaque 2 est de forme cylindrique, et a la même courbure que la surface intérieure de la plate-forme interne 140 du secteur 100.

Le secteur de distributeur 100 est fixé sur la plaque par des moyens de fixation 180 et 180', les moyens 180 comportant une barre de maintien 181, fixée par un crochet 182 pour bloquer le secteur 100 sur un premier côté, et les moyens 180' comprenant des moyens similaires, sur un côté opposé du secteur 100.

La position du secteur 100 est en outre bloquée dans le plan de la plaque par des plots 4 fixés dans celle-ci.

Les moyens de fixation 180 et 180' associés aux plots 4 maintiennent le secteur de distributeur 100 dans une position fixe par rapport à la plaque 2.

On notera que le secteur de distributeur est fixé sur le banc de montage dans une position qui préserve l'accès le plus larges aux parties à mesurer du secteur de distributeur. Ces parties sont les surfaces en regard des aubes adjacentes, situées dans les portions les moins larges des différents canaux inter-aubes, ainsi que les surfaces de contact.

La figure 2 présente trois secteurs de distributeurs 100, 200, 300. Ils sont placés en vis-à-vis les uns des autres en position relative de montage, par aboutement de leurs surfaces de contact respectives.

Dans le procédé de mesure selon l'invention, le secteur de distributeur mesuré est digitalisé en général seul, ou du moins, sans être spécifiquement en position relative de montage par rapport aux aubes de référence. Sa digitalisation permet d'obtenir son modèle numérique tridimensionnel. Lorsque le secteur de distributeur est digitalisé seul, il est plus facile d'obtenir un modèle complet du secteur, c'est-à-dire comportant l'ensemble de ses surfaces extérieures.

La mesure doit comporter notamment la digitalisation des surfaces de contact du secteur de distributeur. Ces surfaces de contact sont les surfaces 131,132,141,142 qui servent à maintenir le secteur par rapport aux secteurs adjacents en position relative de montage.

On obtient par ailleurs les modèles numériques des aubes de référence. Pour chaque aube de référence, son modèle contient les surfaces de contact du secteur dont fait partie l'aube. Ces modèles peuvent par exemple être un extrait de la maquette numérique tridimensionnelle du distributeur (ou seulement du secteur).

On recale (étape c) du procédé) les modèles numériques des aubes de référence par rapport au modèle numérique du secteur. Cette opération est faite en mettant en correspondance les surfaces de contact du secteur mesuré avec celles des secteurs des aubes de référence.

Enfin, on détermine les sections de passage du secteur mesuré. Cette détermination est faite de la manière suivante :

On définit une section de passage du flux entre deux aubes adjacentes comme étant sensiblement égale à l'aire minimale de passage du flux entre celles-ci.

Les sections de passage du secteur sont d'une part, lorsque le secteur comporte plus d'une aube, la ou les sections de passage du flux entre la ou les paires d'aubes adjacentes du secteur ; et d'autre part, la moitié des sections de passage du flux entre une aube d'extrémité du secteur et l'aube de référence recalée en vis-à-vis de celle-ci.

Dans un mode de réalisation, une section de passage du flux entre deux aubes adjacentes est déterminée sur la base de la plus petite distance entre celles-ci. Les plus petites distances entre aubes adjacentes, dans les trois canaux inter-aubes 101, 102, 103 représentés sur la figure 3, sont les distances D1, D2, D3.

Comme cela a été dit en préambule, par extension du concept de section de passage, la distance D2 (pour une section de passage interne du secteur), les moitiés respectives des distances D1 et D3 (pour les sections de passage externes du secteur) peuvent être considérées comme les sections de passage du secteur de distributeur.

Une définition plus exacte des sections de passage nécessite cependant la détermination des sections de passage sous forme d'aires.

Ainsi, pour déterminer une section de passage du flux entre deux aubes adjacentes on mesure l'aire de la section d'espace libre entre les deux aubes, dans le plan sensiblement parallèle à l'axe des aubes et dans lequel la distance entre les aubes est la plus faible.

Une première méthode pour déterminer la valeur des sections de passage du distributeur 100 va maintenant être présentée.

Considérant plus particulièrement le canal inter-aubes 101 (figure 4), la distance entre les plates-formes 130 et 140 étant en première approximation constante (ces plates-formes étant sensiblement de formes cylindriques et coaxiales), dans une méthode de détermination des sections de passage du secteur selon l'invention, la valeur de la section de passage entre deux aubes adjacentes est le produit de la plus petite distance entre les aubes, D1, par la distance H entre les plates-formes.

Par conséquent, aux extrémités du secteur, la section de passage relative au secteur considéré (ou mesuré), dite 'externe', vaut la moitié de ce produit : Elle vaut donc $S_{100/1} = \frac{1}{2} \times S_{101} = \frac{1}{2} \times D1 \times H$ dans le cas de la section relative au canal inter-aubes 101 de la figure 4.

Pour les canaux 102 et 103, les sections de passage relatives au secteur 100 valent respectivement : $S_{100/2} = S_{102} = D2 \times H$ (section de passage interne) ; et enfin $S_{100/3} = \frac{1}{2} \times S_{103} = \frac{1}{2} \times D3 \times H$ (section de passage externe).

La section de passage attribuable au distributeur 100 vaut :

$$S_{100} = S_{100/1} + S_{100/2} + S_{100/3} = \frac{1}{2} S_{101} + S_{102} + \frac{1}{2} S_{103}.$$

D'autre part, grâce à la richesse des informations présentes dans le modèle numérique du secteur, d'autres méthodes pour déterminer la valeur des sections de passage du secteur de distributeur peuvent être utilisées.

En effet, la digitalisation des aubes des secteurs 100 et 200, permet d'obtenir la section réelle du passage 101 et de connaître les positions réelles des quatre parois 111, 222, 135-235, 145-245, délimitant le secteur, représentées sur la figure 4.

La détermination de l'aire de la partie du plan P1 située entre ces quatre parois peut ainsi être faite en mesurant la distance réelle H entre plateformes, mesurée pour le canal considéré entre les deux parois 135-235 et 145-245 des plates-formes 130 et 140, et en multipliant celle-ci par la distance D1 entre les parois 111 et 222 des aubes adjacentes 110 et 220.

On peut de manière alternative exploiter encore plus finement les informations disponibles dans les modèles numériques pour déterminer de manière plus exacte l'aire de passage entre les aubes adjacentes ; différentes méthodes pour calculer l'aire de passage sont envisageables. On peut par exemple remarquer que la partie du plan P1 située entre les quatre parois précitées est sensiblement un trapèze (les parois des aubes sont parallèles), et déterminer l'aire de cette partie de plan en conséquence. On obtient alors une valeur encore plus précise de la section de passage du distributeur.

En faisant référence à la figure 5, un mode de réalisation du procédé de choix d'un arrangement de secteurs pour un distributeur pour turbomachine, va maintenant être décrit.

Dans une première étape, on crée la base de données des modèles numériques tridimensionnels d'un certain nombre de secteurs. A titre d'exemple on peut ainsi supposer que l'on produit les cent modèles numériques de cent secteurs pour distributeurs, numérotés de 1 à 100. Chaque modèle tridimensionnel comprend la représentation de ses surfaces de contact, permettant ainsi le recalage du secteur par rapport à des secteurs adjacents.

On fixe par ailleurs un critère de choix, pour évaluer la qualité d'un arrangement de secteurs donné, et l'on choisit une valeur préférée pour ce critère. Ce critère est fonction des sections de passage des secteurs en position relative de montage dans l'arrangement. On choisit ici le critère suivant :

$$\text{Critère} = \sum\nolimits_{\text{arrangement}} ( S_i - S_0 )^2$$

dans lequel $S_i$ est la section de passage du secteur i et $S_0$ la section de passage nominale d'un secteur, et la somme porte sur tous les secteurs de l'arrangement considéré. (D'autres choix pour le critère sont bien entendu possibles).

La valeur préférée pour ce critère est zéro.

Dans l'exemple considéré, on cherche seulement à optimiser le choix de onze secteurs pour occuper les positions I à XI d'un distributeur.

On envisage parmi les secteurs 1 à 100, tous les arrangements de secteurs permettant de constituer une partie de distributeur. Chaque arrangement se présente comme la suite des références individuelles des secteurs de l'arrangement, ordonnée suivant les positions I à XI et par exemple un des arrangements est la suite : (28-4-90-80-54-43-91-3-11-35-66), dans laquelle par exemple le secteur n°28 occupe la position I et le secteur n°66 la position XI.

Pour chacun des arrangements possibles des cent secteurs, en opérant des sections des modèles numériques ainsi recalés, comme cela a été expliqué en détail précédemment, on détermine les sections de passage de tous les secteurs. Naturellement, pour la détermination des sections de passage externes des aubes situées aux positions d'extrémité dans un arrangement, on prend en compte comme aube de référence le modèle numérique d'une aube aux cotes nominales recalée par rapport au secteur d'extrémité.

On détermine alors les valeurs du critère indiqué plus haut pour les différents arrangement évalués. On retient l'arrangement pour lequel le critère de choix a la valeur la plus proche de la valeur souhaitée.

**Revendications**

1. Procédé de mesure des sections de passage ($S_{100/1}$,$S_{100/2}$,$S_{100/3}$) d'un secteur (100) de distributeur pour turbomachine par rapport à deux aubes de référence, ledit secteur comportant au moins une aube (10,20), le procédé comportant les étapes suivantes :

   a) on produit par digitalisation un modèle numérique tridimensionnel du secteur,
   b) on fournit les modèles numériques de chacune des deux aubes de référence (220,310),
   c) on recale les modèles numériques des deux aubes de référence aux extrémités du modèle numérique du secteur en position relative de montage dans le distributeur,
   d) on détermine les sections de passage ($S_{100/1}$,$S_{100/2}$,$S_{100/3}$) du secteur à partir de sections des modèles numériques du secteur et des aubes de référence,

   le procédé étant **caractérisé en ce que :**

- le secteur de distributeur comporte des surfaces de contact (131,132,141,142), et est placé en position relative par rapport à des secteurs de distributeur adjacents (200,300) par aboutement de ces surfaces de contact,

- les modèles numériques du secteur et des aubes de référence comportent une modélisation des surfaces de contact impliquées dans leur mise en position relative de montage, et

- l'étape c) de recalage des modèles numériques des aubes de référence (220,310) avec le modèle numérique du secteur (100) est réalisée en mettant en correspondance ces surfaces de contact.

**2.** Procédé selon la revendication 1, dans lequel le modèle numérique d'au moins une des aubes de référence (220,310) est obtenu par digitalisation d'au moins un autre secteur de distributeur (200,300).

**3.** Procédé selon la revendication 1, dans lequel le modèle numérique des aubes de référence (220,310) fourni à l'étape b) est un modèle numérique théorique des aubes.

**4.** Procédé selon l'une quelconque des revendications 1 à 3, dans lequel l'étape a) de digitalisation est réalisée à l'aide d'un moyen de mesure optique sans contact.

**5.** Procédé selon l'une quelconque des revendications 1 à 4, dans lequel, une section de passage du flux ($S_{101}$,$S_{102}$, $S_{103}$) entre deux aubes adjacentes étant sensiblement l'aire minimale de passage du flux entre celles-ci, et les sections de passage ($S_{100/1}$,$S_{100/2}$,$S_{100/3}$) du secteur étant d'une part, la moitié des sections de passage du flux ($S_{101}$,$S_{103}$) entre une aube d'extrémité du secteur (110;120) et l'aube de référence recalée en vis-à-vis de celle-ci (220;310), et d'autre part, lorsque le secteur comporte plus d'une aube, la ou les sections de passage du flux ($S_{102}$) entre la ou les paires d'aubes adjacentes (110,120) du secteur ; pour déterminer une section de passage du flux entre deux aubes adjacentes (220,110;110,120;120 ,310) on mesure l'aire de la section d'espace libre entre les deux aubes, dans le plan sensiblement parallèle à l'axe des aubes et dans lequel la distance (D1,D2,D3) entre les aubes est la plus faible.

**6.** Procédé selon l'une quelconque des revendications 1 à 5, dans lequel,
une section de passage du flux entre deux aubes adjacentes ($S_{101}$,$S_{102}$,$S_{103}$) étant sensiblement l'aire minimale de passage du flux entre celles-ci, et les sections de passage du secteur étant d'une part, la moitié des sections de passage du flux ($S_{101}$,$S_{103}$) entre une aube d'extrémité du secteur et l'aube de référence recalée en vis-à-vis de celle-ci, et d'autre part, lorsque le secteur comporte plus d'une aube, la ou les sections de passage du flux ($S_{102}$) entre la ou les paires d'aubes adjacentes du secteur ; une section de passage du flux entre deux aubes adjacentes est déterminée sur la base de la plus petite distance (D1,D2,D3) entre celles-ci.

**7.** Procédé de choix d'un arrangement de secteurs pour un distributeur pour turbomachine, **caractérisé en ce qu'**il comporte les étapes de :

A. on crée par digitalisation une base de données des modèles numériques tridimensionnels de secteurs (100,200,300) pour distributeur ;
B. on fixe un critère de choix d'un arrangement de secteurs et une valeur souhaitée pour ce critère, ce critère étant fonction des sections de passage (Si) des secteurs en position relative de montage dans l'arrangement ;
C. pour différents arrangements évalués, on détermine par montage virtuel la position relative des secteurs montés ensemble ; on évalue alors les sections de passage (Si) des secteurs, à l'aide du procédé suivant l'une quelconque des revendications 1 à 6, en prenant comme aubes de référence pour un secteur les aubes en vis-à-vis des secteurs adjacents dans l'arrangement ; à partir des sections de passage obtenues, on détermine alors la valeur du critère de choix pour l'arrangement évalué ;
D. on retient l'arrangement pour lequel le critère de choix a la valeur la plus proche de la valeur souhaitée.

**8.** Procédé selon la revendication 7, dans lequel à l'étape C), au moins un arrangement évalué est la combinaison d'un arrangement choisi par le procédé et d'un autre secteur ou d'un autre arrangement choisi à l'aide du procédé.

**9.** Procédé selon la revendication 7 ou 8, dans lequel à l'étape A), la base de données utilisée pour le procédé contient des secteurs venant d'un seul distributeur.

**10.** Procédé selon la revendication 7 ou 8, dans lequel à l'étape A), la base de données utilisée pour le procédé contient des secteurs venant d'au moins deux distributeurs différents.

**Claims**

1.  A method of measuring the flow sections ($S_{100/1}$, $S_{100/2}$, $S_{100/3}$) of a turbomachine nozzle sector (100) relative to two reference vanes, said sector having at least one vane (10, 20), the method comprising the following steps:

    a) producing a three-dimensional numerical model of the sector by digitizing;
    b) providing the numerical models of each of two reference vanes (220, 310);
    c) positioning the numerical models of the two reference vanes at the ends of the numerical model of the sector in the assembly relative position in the nozzle; and
    d) determining the flow sections ($S_{100/1}$, $S_{100/2}$, $S_{100/3}$) of the sector from the sections of the numerical models of the sector and of the reference vanes;

    the method being **characterized in that**:

    - the nozzle sector has contact surfaces (131, 132, 141, 142) and is positioned relative to the adjacent nozzle sectors (200, 300) by putting said contact surfaces into abutment;
    - the numerical models of the sector and of the reference vanes include models of the contact surfaces involved in putting them into their assembly relative position; and
    - step c) of positioning the numerical models of the reference vanes (220, 310) relative to the numerical model of the sector (100) is performed by putting said contact surfaces into correspondence.

2.  A method according to claim 1, wherein the numerical model of at least one of the reference vanes (220, 310) is obtained by digitizing at least one other nozzle sector (200, 300).

3.  A method according to claim 1, wherein the numerical model of the reference vanes (220, 310) provided in step b) is a theoretical numerical model of the vanes.

4.  A method according to any one of claims 1 to 3, wherein digitizing step a) is performed with the help of contactless optical measurement means.

5.  A method according to any one of claims 1 to 4, wherein, for a stream flow section ($S_{101}$, $S_{102}$, $S_{103}$) between two adjacent vanes being substantially the minimum stream flow area therebetween, and for the flow sections ($S_{100/1}$, $S_{100/2}$, $S_{100/3}$) of the sector being firstly half of each of the stream flow sections ($S_{101}$, $S_{103}$) between an end vane of the sector (110; 120) and the reference vane positioned facing it (220; 310), and secondly, when the sector has more than one vane, the or each stream flow sections ($S_{102}$) between the pair(s) of adjacent vanes (110, 120) of the sector; in order to determine the stream flow section between two adjacent vanes (220, 110; 110, 120; 120, 310) the area of the section of the empty space between the two vanes is measured in the plane substantially parallel to the axis of the vanes in which the distance (D1, D2, D3) between the vanes is the shortest.

6.  A method according to any one of claims 1 to 5, wherein, for a stream flow section between two adjacent vanes ($S_{101}$, $S_{102}$, $S_{103}$) being substantially the minimum stream flow area therebetween, and the flow sections of the sector being firstly half of the stream flow sections ($S_{101}$, $S_{103}$) between an end vane of the sector and the reference vane positioned facing it, and secondly, when the sector has more than one vane, the stream flow section(s) ($S_{102}$) between the pair(s) of adjacent vanes of the sector; a stream flow section between two adjacent vanes is determined on the basis of the shortest distance (D1, D2, D3) therebetween.

7.  A method of selecting an arrangement of sectors for a turbomachine nozzle, the method being **characterized in that** it comprises the steps of:

    A. creating a database of three-dimensional numerical models of the nozzle sectors (100, 200, 300) by digitizing;
    B. setting a criterion for selecting an arrangement of sectors and setting a desired value for said criterion, the criterion being a function of the flow sections ($S_i$) of the sectors in their assembly relative positions in the arrangement;
    C. for the various arrangements that are evaluated, determining the relative positions of the sectors assembled together by performing virtual assembly; then evaluating the flow sections ($S_i$) of the sectors with the help of the method according to any one of claims 1 to 6, using as reference vanes for any one sector the facing vanes of the sectors that are adjacent in the arrangement, and on the basis of the resulting flow sections, determining the value of the selection criterion for the arrangement being evaluated; and

D. retaining the arrangement for which the selection criterion has the value closest to the desired value.

**8.** A method according to claim 7, wherein, in step C), at least one evaluated arrangement, is the combination of an arrangement selected by the method plus another sector or another arrangement selected with the help of the method.

**9.** A method according to claim 7 or claim 8, wherein, in step A), the database used for the method contains sectors coming from a single nozzle.

**10.** A method according to claim 7 or claim 8, wherein, in step A), the database used for the method contains sectors coming from at least two different nozzles.

**Patentansprüche**

**1.** Verfahren zum Messen der Durchlaßquerschnitte ($S_{100/1}$,$S_{100/2}$,$S_{100/3}$) eines Abschnitts (100) eines Turbomaschinenleitapparats bezogen auf zwei Referenzschaufeln, wobei der Abschnitt mindestens eine Schaufel (10, 20) umfaßt, wobei das Verfahren die folgenden Schritte umfaßt:

a) Herstellen eines dreidimensionalen numerischen Modells des Abschnitts durch Digitalisierung,
b) Bereitstellen der numerischen Modelle jeder der zwei Referenzschaufeln (220, 310),
c) Positionieren der numerischen Modelle der beiden Referenzschaufeln auf die Enden des numerischen Modells des Abschnitts in relativer Montageposition in dem Leitapparat,
d) Bestimmen der Durchlaßquerschnitte ($S_{100/1}$,$S_{100/2}$,$S_{100/3}$) des Abschnitts ausgehend von Abschnitten der numerischen Modelle des Abschnitts und der Referenzschaufeln,

wobei das Verfahren **dadurch gekennzeichnet ist, daß**:

- der Leitapparatabschnitt Kontaktoberflächen (131, 132, 141, 142) umfaßt, und in relativer Position bezogen auf benachbarte Leitapparatabschnitte (200, 300) durch Zusammenfügen dieser Kontaktoberflächen plaziert ist,
- die numerischen Modelle des Abschnitts und der Referenzschaufeln eine Modellierung der Kontaktoberflächen umfassen, die an deren relativer Montagepositionierung beteiligt sind, und
- der Schritt c) des Positionierens der numerischen Modelle der Referenzschaufeln (220, 310) mit dem numerischen Modell des Abschnitts (100) ausgeführt wird, indem diese Kontaktoberflächen in Übereinstimmung gebracht werden.

**2.** Verfahren nach Anspruch 1, wobei das numerische Modell mindestens einer der Referenzschaufeln (220, 310) durch Digitalisierung mindestens eines anderen Leitapparatabschnitts (200, 300) erhalten wird.

**3.** Verfahren nach Anspruch 1, wobei das in Schritt b) bereitgestellte numerische Modell der Referenzschaufeln (220, 310) ein theoretisches numerisches Modell der Schaufeln ist.

**4.** Verfahren nach einem der Ansprüche 1 bis 3, wobei der Schritt a) der Digitalisierung mit Hilfe eines kontaktfreien optischen Mittels zum Messen ausgeführt wird.

**5.** Verfahren nach einem der Ansprüche 1 bis 4, wobei ein Durchlaßquerschnitt des Stroms ($S_{101}$, $S_{102}$, $S_{103}$) zwischen zwei benachbarten Schaufeln im Wesentlichen die minimale Durchlaßfläche des Stroms zwischen diesen ist, und die Durchlaßquerschnitte ($S_{100/1}$, $S_{100/2}$, $S_{100/3}$) des Abschnitts einerseits die Hälfte der Durchlaßquerschnitte des Stroms ($S_{101}$, $S_{103}$) zwischen einer Endschaufel des Abschnitts (110;120) und der Referenzschaufel, die bezogen auf diese (220; 310) positioniert wurde, und andererseits, wenn der Abschnitt mehr als eine Schaufel umfaßt, der oder die Durchlaßquerschnitte des Stroms ($S_{102}$) zwischen dem oder den benachbarten Schaufelpaaren (110, 120) des Abschnitts sind; um einen Durchlaßquerschnitt des Stroms zwischen zwei benachbarten Schaufeln (220, 110; 110, 120; 120, 310) zu bestimmen, wird die Fläche des Abschnitts des freien Raums zwischen den beiden Schaufeln in der im Wesentlichen zur Achse der Schaufeln parallelen Ebene gemessen, und wobei der Abstand (D1, D2, D3) zwischen den Schaufeln der kleinste ist.

**6.** Verfahren nach einem der Ansprüche 1 bis 5, wobei,
ein Durchlaßquerschnitt des Stroms zwischen zwei benachbarten Schaufeln ($S_{101}$, $S_{102}$, $S_{103}$) im Wesentlichen die minimale Durchlaßfläche des Stroms zwischen diesen ist, und die Durchlaßquerschnitte des Abschnitts einerseits die Hälfte der Durchlaßquerschnitte des Stroms ($S_{101}$, $S_{103}$) zwischen einer Endschaufel des Abschnitts und der Referenzschaufel, die bezogen auf diese positioniert wurde, und andererseits, wenn der Abschnitt mehr als eine Schaufel umfaßt, der oder die Durchlaßquerschnitte des Stroms ($S_{102}$) zwischen dem oder den benachbarten Schaufelpaaren des Abschnitts sind; wird ein Durchlaßquerschnitt des Stroms zwischen zwei benachbarten Schaufeln auf der Basis des kleinsten Abstands (D1, D2, D3) zwischen diesen bestimmt.

7. Verfahren zur Auswahl einer Anordnung von Abschnitten für einen Turbomaschinenleitapparat, **dadurch gekennzeichnet, daß** es die Schritte umfaßt:

   A. Erzeugen einer Datenbank der dreidimensionalen numerischen Modelle der Leitapparatabschnitte (100, 200, 300) durch Digitalisierung,
   B. Festlegen eines Auswahlkriteriums für eine Anordnung von Abschnitten und eines gewünschten Werts für dieses Kriterium, wobei dieses Kriterium von den Durchlaßquerschnitten (Si) der Abschnitte in relativer Montageposition in der Anordnung abhängig ist,
   C. für verschiedenen bewertete Anordnungen, Bestimmen der relativen Position der zusammengebauten Abschnitte durch virtuelle Montage; dann Bewerten der Durchlaßquerschnitte (Si) der Abschnitte mit Hilfe des Verfahrens gemäß einem der Ansprüche 1 bis 6, wobei als Referenzschaufeln für einen Abschnitt die Schaufeln gegenüber den benachbarten Abschnitten in der Anordnung genommen werden; dann, ausgehend von den erhaltenen Durchlaßquerschnitten, Bestimmen des Werts des Auswahlkriteriums für die bewertete Anordnung,
   D. Speichern der Anordnung, für die das Auswahlkriterium den Wert hat, der dem gewünschten Wert am nächsten kommt.

8. Verfahren nach Anspruch 7, wobei in Schritt C) mindestens eine bewertete Anordnung die Kombination einer durch das Verfahren ausgewählten Anordnung und eines anderen Abschnitts oder einer anderen, mit Hilfe des Verfahrens ausgewählten Anordnung ist.

9. Verfahren nach Anspruch 7 oder 8, wobei in Schritt A) die für das Verfahren verwendete Datenbank Abschnitte enthält, die von einem einzigen Leitapparat stammen.

10. Verfahren nach Anspruch 7 oder 8, wobei in Schritt A) die für das Verfahren verwendete Datenbank Abschnitte enthält, die von mindestens zwei verschiedenen Leitapparaten stammen.

FIG.1

**FIG.2**

**FIG.3**

**FIG.4**

**FIG.5**

**EP 2 075 527 B1**

## RÉFÉRENCES CITÉES DANS LA DESCRIPTION

**Documents brevets cités dans la description**

- US 20070050172 A